# EUROPÄISCHE PATENTSCHRIFT

(11) **EP 1 109 994 B1**
(45) Veröffentlichungstag und Bekanntmachung des Hinweises auf die Patenterteilung: **10.07.2002**
(21) Anmeldenummer: 99944342.7
(22) Anmeldetag: 07.08.1999
(51) Int. Cl.: F01N 7/08, F01N 3/28, F02B 37/00

(54) **VORRICHTUNG ZUR STRÖMUNGSBERUHIGUNG IN DER ABGASLEITUNG EINES VERBRENNUNGSMOTORS**
DEVICE FOR STABILISING THE FLOW IN THE EXHAUST LINE OF AN INTERNAL COMBUSTION ENGINE
DISPOSITIF DE STABILISATION D'ECOULEMENT DANS UNE CONDUITE D'ECHAPPEMENT DE MOTEUR A COMBUSTION INTERNE

(30) Priorität: 26.08.1998 DE 19838703
(43) Veröffentlichungstag der Anmeldung: 27.06.2001
(73) Patentinhaber: ZEUNA-STÄRKER GMBH & CO KG, 86154 Augsburg (DE)
(72) Erfinder: KLAUS, Benedikt, D-86356 Neusäss (DE); MAYR, Andreas, D-86405 Meitingen (DE); ULLMER, Alois, D-86163 Augsburg (DE)
(74) Vertreter: Grättinger & Partner (GbR)
(86) Internationale Anmeldenummer: EP9905716
(87) Internationale Veröffentlichungsnummer: WO0012880

(56) Entgegenhaltungen:
- DE-A- 3 120 212
- US-A- 4 182 120
- US-A- 4 529 356
- PATENT ABSTRACTS OF JAPAN vol. 1998, no. 02, 30. Januar 1998 (1998-01-30) & JP 09 264128 A (FUTABA SANGYO KK), 7. Oktober 1997 (1997-10-07)

## Beschreibung

Die Erfindung betrifft eine Vorrichtung zur Strömungsberuhigung in der Abgasleitung eines Verbrennungsmotors, insbesondere am abgasseitigen Ausgang eines einem Verbrennungsmotor nachgeschalteten Abgasturboladers, bestehend aus einem Leitblech, welches eine Mehrzahl von in Strömungsrichtung erstreckten, quer zum Abgasrohr verlaufenden Stegblechen umfaßt.

Bei der Anordnung von Abgasturboladern sind häufig zwei negative Effekte zu beobachten. An motornahen Katalysatoren kommt es zu einer schlechten Strömungsverteilung an der Stirnfläche des Katalysatorkörpers, was sich besonders negativ im Teillastbetrieb des Motors auswirkt, weil dabei die Abgasströmung stark Drall behaftet ist. Die Folge davon ist eine Verschlechterung der Abgasreinigungswirkung des Katalysators.

Besonders bei Abgasturboladern neuerer Art mit verstellbaren Leitschaufeln kommt es zudem bei bestimmten Drehzahlen unter Teillast zu einer äußerst unangenehmen, mit einem Heulton vergleichbaren Geräuschbildung in der Abgasanlage, die sich bis zum Mündungsgeräusch fortpflanzt. Dieses Geräusch kann zwar in der Schalldämpferanlage bedämpft werden, was aber nur mit einem nicht unerheblichen Mehraufwand machbar ist. Bei manchen besonders engen Einbausituationen tritt die Schwierigkeit hinzu, daß für derartige Dämpfungsmaßnahmen das erforderliche zusätzliche Schalldämpfervolumen im Unterboden des Fahrzeugs nicht untergebracht werden kann.

Die US 4529356 A offenbart eine Vorrichtung der eingangs angegebenen Art. Dabei ist dem Abgasturbolader eines aufgeladenen Verbrennungsmotors ein leicht konisch divergierendes Gehäuse nachgeschaltet, wobei im Bereich des maximalen Strömungsquerschnitts ein acht radial ausgerichtete Stegbleche umfassendes Leitblech angeordnet ist.

Der vorliegenden Erfindung liegt die Aufgabe zugrunde, eine Vorrichtung der eingangs genannten Art zu schaffen, welche sich mit minimalen Kosten herstellen läßt, wobei die Vorrichtung zur Strömungsberuhigung bevorzugt keinen Mehrbedarf an Einbauraum benötigen und die beiden mit der Anordnung eines Abgasturboladers verbundenen vorstehend erwähnten Nachteile weitgehend beheben soll.

Erfindungsgemäß wird diese Aufgabe durch eine Vorrichtung gemäß Anspruch 1 gelöst. Die erfindungsgemäße Vorrichtung zur Strömungsberuhigung zeichnet sich somit dadurch aus, daß das Leitblech durch Quetschen oder Preßformen eines Blechrings hergestellt ist. Der Blechring kann dabei insbesondere aus einem dünnwandigen Rohrabschnitt gebildet sein. Die Verformung des Blechrings erfolgt dabei bevorzugt in der Weise, daß sich die Stegbleche gegenseitig nicht berühren, sondern allenfalls bis auf kleine Spaltbreiten annähern.

Mit einer derartig einfachen Vorrichtung, die bevorzugt direkt am Austritt des Abgasturboladers eingebaut wird, ist es überraschenderweise gelungen, nicht nur die gewünschte Gleichströmung am Eingang in den Katalysator zu erzielen, sondern auch die gewünschte Dämpfungswirkung hervorzubringen. Dabei wurde bei dem gemessenen störenden Frequenzband eine Dämpfung von 12 dB erreicht, was im Summenpegel, d. h. über alle Frequenzen gemittelt, eine Absenkung von immerhin 8 dB bedeutet. Würde man stattdessen mit einem üblichen Gleichrichter, der z. B. aus einer Mehrzahl kleiner Rohre aufgebaut ist, arbeiten, so würde dies nur mit einem höheren Aufwand bei größerer Baulänge zu verwirklichen sein; ohne einen derartigen Gleichrichter wäre eine gerade Rohrstrecke vonnöten, deren Länge etwa dem zehnfachen Wert des Rohrdurchmessers des Abgasrohrs entspricht.

Nach dem erfindungsgemäßen Lösungsvorschlag hingegen besitzen die Stegbleche eine nur geringe Ausdehnung in Längsrichtung des Abgasrohrs, wobei beispielsweise eine axiale Länge der Stegbleche ausreichend ist, welche geringer ist als der Radius des Abgasrohrs.

Das erfindungsgemäße Leitblech besteht im wesentlichen aus Stegblechen, welche im wesentlichen radial verlaufen, sowie einem oder mehreren Umfangsblechen, mit denen die Stegbleche mit ihren rohrwandseitigen Enden verbunden sind; die Umfangsbleche wiederum sind an der Rohrwand befestigt, z. B. durch Schweißen oder Einpressen in das Abgasrohr. Der Sitz des Leitblechs im Abgasrohr kann durch Verhaken des Abgasrohrs mit dem Umfangsblech des Leitblechs gesichert werden, z. B. indem Nasen in das Abgasrohr eingedrückt werden, die in entsprechende Nasen der Umfangsbleche eingreifen.

Die Stegbleche des Leitblechs sind derart ausgebildet, daß sie im wesentlichen radial verlaufen bzw. im Querschnitt durch das Abgasrohr gesehen im wesentlichen geradlinig. Die Stegbleche können in einer beliebigen geradzahligen Anzahl vorhanden sein; es kann sich aber auch eine ungeradzahlige Anzahl als günstig erweisen, z. B. in Form dreier Stegbleche in Y-Anordnung. In der Praxis hat sich ein Leitblech in Form einer gequetschten "8", demnach mit vier radial verlaufenden Stegblechen und zwei dazwischen angeordneten Umfangsblechen als vorteilhaft erwiesen.

Dadurch, daß der Übergangsbereich zwischen Umfangs- und Stegblechen bei der vorstehenden Ausführungsform einen Radius beschreibt, wird die Tendenz der Stegbleche, sich nicht zu berühren, noch verstärkt, da sich der Radius mit zunehmender Temperatur in Richtung einer Abflachung der Krümmung vergrößert, wodurch die Stegbleche auseinandergezogen werden. Dadurch, daß die Stegbleche sich nicht berühren, wird möglichen Wärmespannungen und als Folge davon Rissen vorgebeugt, d. h. die Lebensdauer des Leitblechs entspricht jener der gesamten Abgasanlage.

Das erfindungsgemäße Leitblech ist bevorzugt unmittelbar am Austritt des Abgasturboladers angeordnet, vorteilhaft derart nahe, daß das Leitblech dem Austrittsquerschnitt des Turboladers näher ist als der axialen Länge der Stegbleche entspricht.

Das erfindungsgemäße Leitblech kann auch an anderen Stellen der Abgasleitung eines Kraftfahrzeugs bzw. eines Verbrennungsmotors angeordnet sein als zwischen Abgasturbolader und dem Eingang des Katalysators, nämlich überall dort, wo eine Strömungsberuhigung erforderlich ist. Die Praxis hat jedenfalls gezeigt, daß entgegen den einschlägigen Theorien aus der Strömungslehre die erläuterte geringe Längenausdehnung des Leitblechs in Strömungsrichtung ausreicht.

Im Folgenden wird eine Ausführungsform der erfindungsgemäßen Vorrichtung anhand der Zeichnung erläutert. Es zeigt
- Fig. 1: eine Ansicht des zum Turbolader hin weisenden Flanschs des Abgasrohrs,
- Fig. 2: einen Schnitt gemäß II-II der Fig. 1,
- Fig. 3: eine Draufsicht auf die Darstellung gemäß Fig. 1,
- Fig. 4: einen axialen Teilschnitt durch das das Leitblech aufnehmende Ende des Abgasrohrs und
- Fig. 5: einen Querschnitt durch eine Ausführungsform eines Leitblechs in schematischer Darstellung.

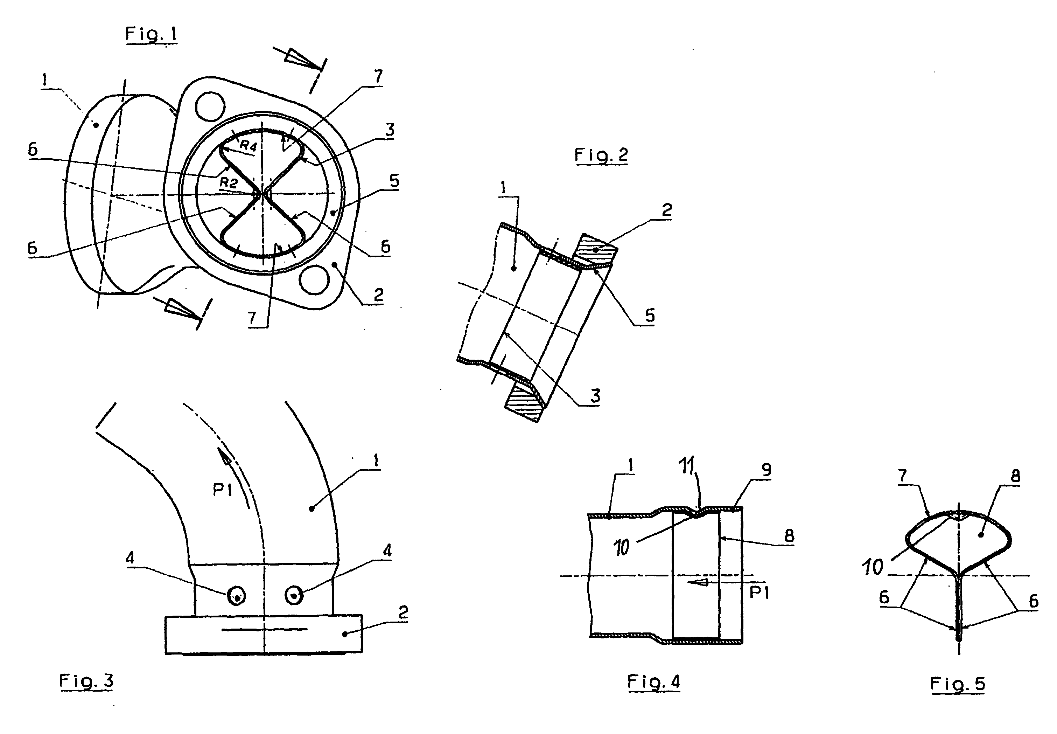

Die Figuren 1 bis 3 zeigen einen Abschnitt des Abgasrohrs 1, welcher gemäß Pfeil P1 in Richtung des nicht dargestellten Katalysators durchströmt wird. Der Abgasstrom gemäß Pfeil P1 kommt aus dem ebensowenig dargestellten Abgasturbolader, an dessen Ausgang der Flansch 2 des zugeordneten Endes des Abgasrohrs 1 angeschlossen wird. Teilweise noch innerhalb des Flansches 2 ist im Abgasrohr 1 ein Leitblech 3 durch Schweißpunkte 4 befestigt. Zum Abgasturbolader hin endet das Abgasrohr 1 mit einer kurzen Erweiterung 5.

Das Leitblech 3 besitzt die Form einer beidseitig gequetschten "8", welche zusammengesetzt ist aus vier Stegblechen 6 und zwei Umfangsblechen 7. Das Leitblech 3 ist im Bereich seiner Umfangsbleche 7 am Innenumfang des Abgasrohrs 1 befestigt, z. B. indem es dort bei leicht aufgeweitetem Abgasrohr eingepreßt wird. Benachbarte Stegbleche 6 bilden miteinander einen Winkel von 90°. Im Übergangsbereich von den Stegblechen 6 zu den Umfangsblechen 7 besitzt das Leitblech eine abgerundete Form gemäß Radius R4; auch zum Mittelpunkt hin grenzen die benachbarten Stegbleche 6 über einen Radius R2 aneinander an. Beide Radien R2, R4 haben die Tendenz, sich unter Temperatureinwirkung abzuflachen, d. h. die Stegbleche 6 entfernen sich im Mittelpunkt voneinander, so daß sie dort einen schmalen Spalt bilden. Dadurch daß sich die Stegbleche 6 nicht berühren, unterbleibt dort die Reibung bzw. jede Verspannung, was sich günstig auf die Lebensdauer des Leitblechs 3 auswirkt.

Gemäß Fig. 5 ist als Alternative zur abgeflachten "8" gemäß den Fig. 1 bis 3 eine etwa pilzförmige Querschnittsform eines Leitblechs 8 dargestellt, welche ebenfalls vier Stegbleche 6 umfaßt, von denen zwei dicht aneinanderliegen, wobei sie miteinander gewissermaßen den schlanken Stiel der Pilzform bilden; deren Kappe ist durch ein Umfangsblech 7 gebildet. Gemäß Fig. 5 ist eine Querschnittsform eines Leitblechs 8 geschaffen, welche effektiv nur drei Stegbleche aufweist, da von vier Stegblechen zwei sehr eng nebeneinander liegen.

Fig. 4 zeigt zu Fig. 5 eine entsprechende Einbausituation des Leitblechs 8 im Inneren eines erweiterten Endabschnitts 9 des Abgasrohrs 1. Das Leitblech 8 ist durch Nasen 10 lagegesichert, in welche entsprechende Nasen 11 des Abgasrohrs 1 eingreifen. Gemäß Fig. 4 ist der Anschlußflansch an den Abgasturbolader weggelassen. Aus diesem strömt das Abgas gemäß Pfeil P1 in Richtung Katalysator. Im Bereich des Leitblechs 8 wird der Abgasstrom beruhigt, d. h. gleichförmig gemacht, so daß er die Stirnseite des Katalysatorkörpers mit gleichmäßiger Verteilung beaufschlagt. Gemäß Fig. 4 erkennt man deutlich, daß das Leitblech 8 sehr nahe des Ausgangs des Turboladers angeordnet ist, dessen Austrittsöffnung mit dem rechtsseitigen Ende des Abgasrohrs 1 übereinstimmt. Demnach beträgt der Abstand des Leitblechs 8 vom Austrittsquerschnitt des Turboladers weniger als die axiale Erstreckung des Leitblechs 8.

## Patentansprüche

1. Vorrichtung zur Strömungsberuhigung in der Abgasleitung eines Verbrennungsmotors, insbesondere am abgasseitigen Ausgang eines einem Verbrennungsmotors nachgeschalteten Abgasturboladers, bestehend aus einem Leitblech (3, 8), welches eine Mehrzahl von in Strömungsrichtung erstreckten, quer zum Abgasrohr (1) verlaufenden Stegblechen (6) umfaßt,
**dadurch gekennzeichnet,**
**daß** das Leitblech (3, 8) durch Quetschen oder Pressformen eines Blechrings hergestellt ist.

2. Vorrichtung nach Anspruch 1,
**dadurch gekennzeichnet,**
**daß** die Stegbleche (6) im wesentlichen radial verlaufen.

3. Vorrichtung nach Anspruch 1,
**dadurch gekennzeichnet,**
**daß** die Stegbleche (6) mit ihren rohrwandseitigen Enden mit einem oder mehreren Umfangsblechen (7) verbunden sind, die an der Rohrwand befestigt sind.

4. Vorrichtung nach Anspruch 1,
**dadurch gekennzeichnet,**
**daß** die Stegbleche (6) eine geringe Ausdehnung in Längsrichtung des Abgasrohrs (1) aufweisen.

5. Vorrichtung nach Anspruch 4,
**dadurch gekennzeichnet,**
**daß** die axiale Länge der Stegbleche (6) geringer ist als der Radius des Abgasrohrs (1).

6. Vorrichtung nach Anspruch 1,
**dadurch gekennzeichnet, daß** das Leitblech (3, 8) näher dem Austritt des Abgasturboladers angeordnet ist als der axialen Länge der Stegbleche (6) entspricht.

7. Vorrichtung nach Anspruch 1,
**dadurch gekennzeichnet,**
**daß** der Blechring aus einem dünnwandigen Rohrabschnitt gebildet ist.

8. Vorrichtung nach Anspruch 1,
**dadurch gekennzeichnet,**
**daß** sich die Stegbleche (6) nicht berühren.

9. Vorrichtung nach Anspruch 1,
**dadurch gekennzeichnet,**
**daß** der Übergangsbereich zwischen Umfangs- und Stegblechen (6) einen Radius (R4) beschreibt.

10. Vorrichtung nach Anspruch 1,
**dadurch gekennzeichnet,**
**daß** die Stegbleche (6), im Querschnitt durch das Abgasrohr (1) gesehen, im wesentlichen geradlinig verlaufen.

11. Vorrichtung nach Anspruch 1,
**dadurch gekennzeichnet,**
**daß** das Leitblech (3, 8) mit dem Abgasrohr (1) durch Schweißen oder Einpressen verbunden ist.

12. Vorrichtung nach Anspruch 11,
**dadurch gekennzeichnet,**
**daß** der Sitz des Leitblechs (3, 8) im Abgasrohr (1) durch Verhaken des Abgasrohres mit dem Umfangsblech (7) des Leitblechs (3, 8) gesichert ist.

## Claims

1. A device for calming the flow in the exhaust gas line of a combustion engine, in particular at the exhaust gas outlet of an exhaust gas turbocharger placed downstream from a combustion engine, consisting of a baffle plate (3, 8) consisting of numerous web plates (6) that extend in the direction of flow and run transverse to the tailpipe (1), **characterized in that** the baffle plate (3, 8) is manufactured by squeezing or press-forming a sheet ring.

2. The device according to claim 1, **characterized in that** the web plates (6) run essentially in a radial manner.

3. The device according to claim 1, **characterized in that** the tube wall side ends of the web plates (6) are connected with one or more peripheral sheets (7), which are secured to the tube wall

4. The device according to claim 1, **characterized in that** the web plates (6) are slightly expanded in the longitudinal direction of the tailpipe (1).

5. The device according to claim 4, **characterized in that** the axial length of the web plates (6) is smaller than the radius of the tailpipe (1).

6. The device according to claim 1, **characterized in that** the baffle plate (3, 8) is situated nearer to the outlet of the exhaust gas turbocharger than corresponds to the axial length of the web plates (6).

7. The device according to claim 1, **characterized in that** the sheet ring consists of a thin-walled tubular section.

8. The device according to claim 1, **characterized in that** the web plates (6) do not contact each other.

9. The device according to claim 1, **characterized in that** the transitional area between the peripheral and web plates (6) describes a radius (R4).

10. The device according to claim 1, **characterized in that** the web plates (6) run in essentially a straight line viewed in cross section through the tailpipe (1).

11. The device according to claim 1, **characterized in that** the baffle plate (3, 8) is connected with the tailpipe (1) by welding or pressing in.

12. The device according to claim 11, **characterized in that** the fit of the baffle plate (3, 8) in the tailpipe (1) is secured by hooking the tailpipe with the peripheral plate (7) of the baffle plate (3, 8).

## Revendications

1. Dispositif pour stabiliser l'écoulement dans la conduite d'échappement d'un moteur à combustion interne, en particulier à la sortie d'un turbo-compresseur placé derrière un moteur à combustion interne, comprenant une tôle déflectrice (3, 8) qui comporte une pluralité de tôles formant cloisons (6) s'étendant dans la direction d'écoulement, transversalement à la conduite d'échappement (1), **caractérisé en ce que** la tôle déflectrice (3, 8) est fabriquée par pliage ou par formage à la presse d'un anneau de tôle.

2. Dispositif selon la revendication 1, **caractérisé en ce que** les tôles formant cloisons (6) s'étendent essentiellement radialement.

3. Dispositif selon la revendication 1, **caractérisé en ce que** les tôles formant cloisons (6) sont liées par leurs extrémités côté paroi à une ou plusieurs tôles périphériques qui sont fixées à la paroi de conduite.

4. Dispositif selon la revendication 1, **caractérisé en ce que** les tôles formant cloisons (6) présentent une faible longueur dans la direction longitudinale de la conduite d'échappement (1).

5. Dispositif selon la revendication 4, **caractérisé en ce que** la longueur axiale des tôles formant cloisons (6) est inférieure au rayon de la conduite d'échappement (1).

6. Dispositif selon la revendication 1, **caractérisé en ce que** la tôle déflectrice (3, 8) est disposée à une distance de la sortie du turbo-compresseur qui est inférieure à la longueur axiale des tôles formant cloisons (6).

7. Dispositif selon la revendication 1, **caractérisé en ce que** l'anneau en tôle est formé d'un tronçon de tube à faible épaisseur de paroi.

8. Dispositif selon la revendication 1, **caractérisé en ce que** les tôles formant cloisons (6) ne se touchent pas.

9. Dispositif selon la revendication 1, **caractérisé en ce que** la zone de raccordement entre tôle périphérique et tôles formant cloisons (6) forme un rayon (R4).

10. Dispositif selon la revendication 1, **caractérisé en ce que** les tôles formant cloisons (6), vu en section transversale à travers la conduite d'échappement (1), sont essentiellement rectilignes.

11. Dispositif selon la revendication 1, **caractérisé en ce que** la tôle déflectrice (3, 8) est liée à la conduite d'échappement (1) par soudage ou par déformation.

12. Dispositif selon la revendication 11, **caractérisé en ce que** la fixation de la tôle déflectrice (3, 8) dans la conduite d'échappement (1) est assurée par agrafage de la conduite d'échappement avec la tôle périphérique (7) de la tôle déflectrice (3, 8).
